# EUROPEAN PATENT SPECIFICATION

(11) **EP 0 597 251 B1**
(45) Date of publication and mention of the grant of the patent: **19.06.1996**
(21) Application number: 93116256.4
(22) Date of filing: 07.10.1993
(51) Int. Cl.: B60R 9/12, F16B 47/00

(54) **Ski carrier**
Ski-Träger
Porte-skis

(30) Priority: 12.11.1992 KR 9222225 U; 01.06.1993 KR 939381 U
(43) Date of publication of application: 18.05.1994
(73) Proprietor: Moon, Soo Man, Namdong-ku, Inchon (KR)
(72) Inventor: Moon, Soo Man, Namdong-ku, Inchon (KR)
(74) Representative: KUHNEN, WACKER & PARTNER

(56) References cited:
- WO-A-90/01999
- DE-A- 4 111 580
- FR-A- 1 576 729
- FR-A- 2 603 536
- PATENT ABSTRACTS OF JAPAN vol. 012, no. 149 (M-694)10 May 1988 & JP-A-62 268 751 (NICHIREI MAGNET K.K.) 21 November 1987

## Description

The present invention relates to a ski carrier for mounting on a roof of an automobile, and more particularly to a ski carrier combined with rubber sucking adhering plates and vacuum sucking adhering plates.

Heretofore, a carrier for carrying and mounting an article which is long in length such as a ski on a roof of an automobile is disclosed in Japanese laid open publication of utility model application Sho-54-15952, Sho-57-202356 and Sho-64-11856. However, since in these known devices a tightening means for tightening to a rain receiver or side sill of the automobile is provided at one side of a supporting body and a vacuum sucking adhering plate to be fixed on the roof of the automobile is fixed to the other side and a ski mounting groove is formed on the supporting body so as to be able to either hook up a band or rotate a cover, an adhering and releasing of these known devices is troublesome, and since the releasing is troublesome it has become common to drive around in e.g. a town with the mounted carrier even when the carrier is not used. This detracts from appearance and concern about theft also arises.

An article which solves the above-described drawbacks of attachment is disclosed in Japanese laid open publication of patent application Sho-62-268571. In this known device a periphery of a sucking adhering means is closely contacted at a bottom end of a dome shaped external housing and a pierced through hole is provided in the external housing through which a shaft of a sucking adhering plate provided with a magnet is inserted. A lever is provided at its upper end and the ski is inserted into the dome formed at a head portion of the external housing so as to be able to fixed by a band. This known device has an advantage in that it can either be mounted on the roof of automobile or easily released therefrom, but since anyone can easily remove the vacuum of the sucking adhering plate, its releasing is easy by anyone, and therefore there is a disadvantage that it is hard to obtain a burglarproof function of the ski or the carrier including the ski.

DE-A-4 111 580 shows an other fixing devive having a suction capability. There is provided a fixing plate body of plate-like material, said fixing plate body being the enclosing wall of the suction cup.

FR-A-2 603 536 shows an apparatus for fixing a carrier or the like to a vehicle. Either suction forces or magnetic forces can be used for this purpose.

WO-A-90 01 999 discloses an anti-theft device. It consists of a view-conceiling member to be placed on a windscreen of a vehicle, to the surface of a computer monitor or the like in order to prevent unauthorized use. This anti-theft device consist substantially of a suction cup to be attached directly on the surface to be protected and thereafter the suction cup is activited by specific means for generating a restraining force which is greater than the rupture limit of the material to be protected by this device.

FR-A-1 576 729 shows an apparatus for fixing different items by means of flexible plate-like magnets. The present invention starts from this known apparatus. There is provided a plate-like flexible magnet, the upper surface thereof carrying a vertical ring being crossed by a traverse member which in turn carries a fixing member, for example a strap-joint. The free space between the plate-like magnet and the underside of the traverse member is for accomodating warping of the magnet in a convex shape. It is this convex warping of the plate-like magnet which creates in addition to the magnetic attraction force a adhesion or suction force.

The main disadvantages resulting from the subject matter of FR-A-1 576 729 are as follows:
the flexible plate-like magnet simultaneously is the member for generating a suction force in addition to the magnetic attraction force and thus upon relieve of the suction force also the magnetic attraction force is relieved. In other words, in case due to dirt or uneven surfaces (for example a sharp bent or borders on a vehicle's roof or the like), it is possible that due to the high forces acting on a ski carrier in case of high speeds and respective wind forces and/or in case of heavy vibrations that air will enter between the underside of the plate-like magnetic member and the surface it is attracted too. In case of ingress of air the suction force is relieved and the ski carrier is held by magnetic forces alone. Needless to say that this gives risk to possible losses and accidents resulting therefrom.

Ingress of air between the above mentioned two surfaces can also be accomplished easyly by inserting a tool, for example a screw driver or a knife between these surfaces followed by a subsequent lifting-off of the ski carrier, this giving a considerable risk that the ski carrier will be stolen.

It is, accordingly, in view of FR-A-1 576 729 a main object of the present invention to provide a ski carrier which is free from the above problems, i. e. which is capable of providing a long-lasting and save fixing and which is substantially free of the risk of being stolen.

A solution of this object is achieved by what is claimed in claim 1.

Accordingly, there is provided a ski carrier, said ski carrier comprises a magnetically acting fixing member comprising a rubber magnet plate; a carrier main body which is fixed to said fixing member for supporting and fixing the ski; and a cover which is connected to said carrier main body for covering ski fixing means of said carrier main body. Furthermore, according to the invention said rubber magnet plate of said magnetically acting fixing member is covered by a fixing plate body of plate-like material; a vacuum sucking adhering means is arranged in a center of said magnetically acting fixing member and comprises a vacuum sucking adhering plate, which can be vertically actuated by an actuating lever via a shaft inserting hole; and said cover connected to said carrier main body also is for covering said actuating lever of said vacuum sucking adhering means.

Thus, according to a first feature of the invention, the flexible rubber magnet plate of the magnetically acting fixing member is covered by a fixing plate body of plate-like material. Accordingly, it is not possible to easily insert a tool (screw driver or knife) between the underside of the rubber magnet plate and the surface it adheres to, since lifting-up of the (elastic) rubber magnet plate is substantially prevented by the plate-like fixing plate body. This, in turn, makes it more or less impossible to reach the vacuum sucking adhering means, which is - according to a further aspect of the invention - arranged in a center of the magnetically acting fixing member. In other words, since the weak rubber magnet plate cannot be easily displaced by a suitable tool, it is not possible to even reach the vacuum sucking adhering means and to pierce it such that air can enter and the vacuum action is relieved.

These first two basic aspects of the present invention provide a save fit of the ski carrier on the underlying surface, as the magnetically acting fixing member is supported in its action by the vacuum sucking adhering means, which is independent therefrom and vice versa, so that the two different holding forces (magnetic and vacuum) are not superimposed as in case of e.g. FR-A-1 576 729, but act in a somehow concentric and adjacent manner. Furthermore, since the weak rubber magnet plate is protected by the fixing plate body, the rubber magnet plate cannot be displaced easily in order to reach the vacuum sucking adhering means such that said vacuum sucking adhearing means is pierced or lifted by rude forces in order to allow the ingress of air. Accordingly, there is also a very high protection against theft.

Finally, according to a third feature of the invention, the cover which is for covering the ski fixing means is also for covering the actuating lever of the vacuum sucking adhering means. This leads to the result that said actuating lever cannot be actuated in the closed condition of the cover, so that there is an additional protection against theft. Furthermore the actuating lever cannot spring up unintentionally due to shocks or vibrations, so that also under normal conditions of use safety of the ski carrier is improved.

Advantageous modifications of the invention are subject-matter of the subclaims.

Thus, the vacuum sucking adhering means in the center of the magnetically acting fixing member preferably comprises furthermore an operating shaft which is fixed with its bottom end to a top surface center portion of said vacuum sucking adhering plate and extends into direction of its upper portion through said shaft inserting hole pierced through said carrier main body and said actuating lever acts on said upper portion of said operating shaft for lifting up and dropping down said top surface center portion of said vacuum sucking adhering plate.

Said vacuum sucking adhering plate is preferably provided within a vacuum sucking adhering plate inserting portion formed in the center of said fixing member.

Preferably a vacuum releasing means is further provided which comprises a hooking protrusion formed at one side of said vacuum sucking adhering plate inserting portion of the fixing member, a protrusion formed at one side periphery edge of the vacuum sucking adhering plate in an overlying relationship to said hooking protrusion, and a handle provided to the fixing plate body, wherein upon lifting said handle said hooking protrusion lifts up said overlying protrusion of said vacuum sucking adhering plate for allowing ingress of air under said vacuum sucking adhering plate.

Further aspects, features and advantages of the invention become more clearly apparent from the following description, which is to be seen as being illustrative only and to be in conjunction with the accompanying drawings, in which:
FIG. 1 is an exploded perspective view of an embodiment of the present invention which is partly cut out;
FIG. 2 is a longitudinal cross sectional view in the using state of the ski carrier of the present invention;
FIGs. 3 are longitudinal cross sectional views showing a part of vacuum sucking adhering plate of the present invention, in which
   FIG. 3(A) is a cross sectional view in a state before vacuum is applied, and
   FIG. 3(B) is a cross sectional view in a state after releasing the vacuum; and

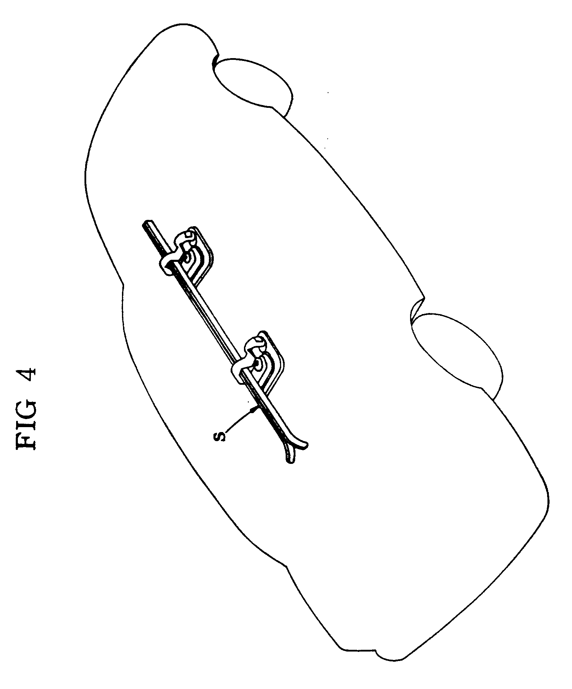

FIG. 4 is a perspective view of the ski carrier according to the present invention when mounted to an automobile.

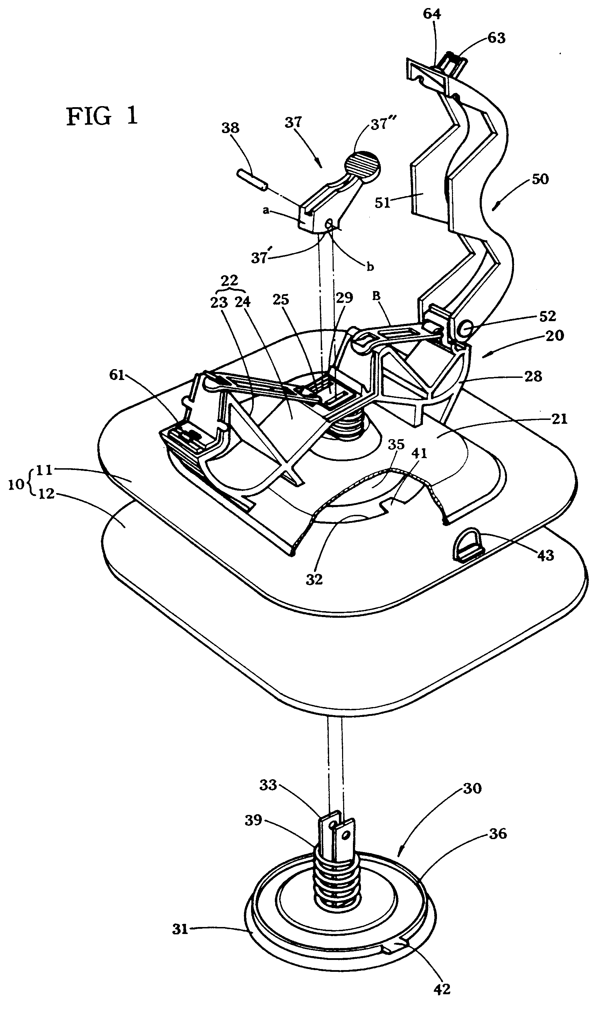

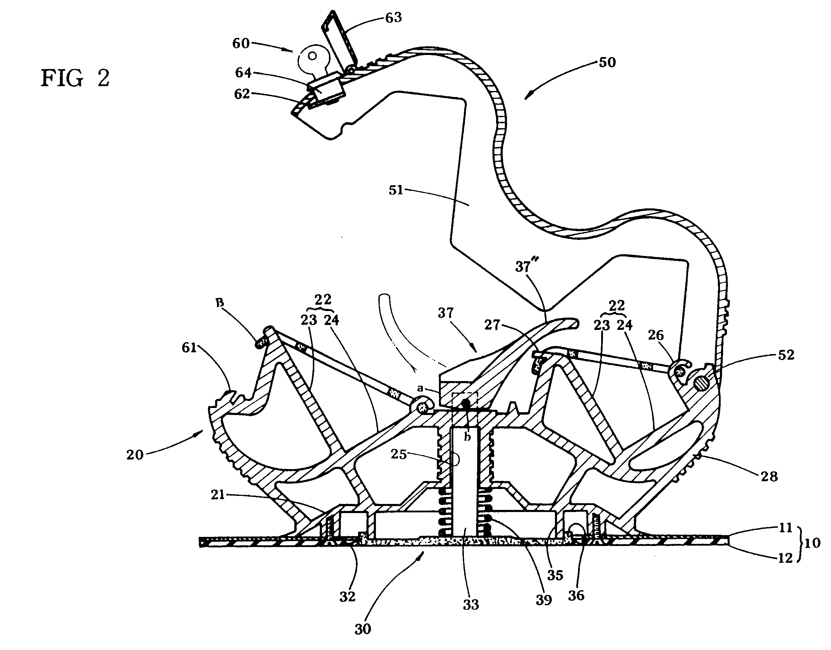

The ski carrier according to the present invention comprises, as shown in FIG. 1 and FIG. 2, a fixing member 10 to be fixed on a roof of an automobile, a carrier main body 20 which is fixed to the fixing member 10 and is for supporting and fixing a ski S, a vacuum sucking adhering means 30 provided at the center of the fixing member 10 and to a shaft inserting hole of the carrier main body 20, a cover 50 for covering a ski fixing means 22 of the carrier main body 20 and a lever 37 of the vacuum sucking adhering means 30, and a locking means 60 for locking the cover 50 to the carrier main body 20.

The fixing member 10 includes a fixing plate body 11 of plate-like material made of synthetic resin or metal and a rubber magnet plate 12 adhered to its bottom surface, and a vacuum sucking adhering plate inserting means 32 to be inserted with a hereinafter described vacuum sucking adhering plate 31 which is formed slightly larger than a diameter of the vacuum sucking adhering plate 31 at the center of the fixing plate body 11 and the rubber magnet plate 12.

The carrier main body 20 includes a supporting base portion 21 which is fixed by a screw to the fixing member 10 and closely contacts the fixing plate body 11, wherein a shaft inserting hole 25 is formed between two ski fixing means 22, which are integrally formed at right and left sides at the upper portion of said supporting base portion 21 and its ski fixing means 22, and a locking means 60.

The ski fixing means 22 is integrally formed with the supporting base portion 21 by a connecting rib 28 formed to right and left sides of the supporting base portion 21 and formed with a ski corner supporting portion 24 perpendicularly to the ski supporting portion 23 and band hookers 26, 27 are formed to the upper end portion of the ski supporting portion 23 and the ski corner supporting portion 24 so as to be able to hook up an elastic band B.

The vacuum sucking adhering means 30 includes a pressing piece 35 protruding in a circular shape at the supporting portion 21 of the carrier main body 20, a vacuum sucking adhering plate 31 provided to vacuum sucking adhering plate inserting portion 32, a supporting piece 36 of circular shape formed by so protruding that an outer diameter of the pressing piece 35 is contacted to the upper surface of the vacuum sucking adhering plate 31, an operating shaft 36 extending to the top through shaft inserting hole 25 pierced at a center portion of the carrier main body 20, and a lever 37 which is rotatably connected to the top end portion of the operating shaft 33 and is for lifting up and dropping down the operating shaft 33. When the operating shaft 33 fixed to the center portion of the vacuum sucking adhering plate 31 by the lever 37, the outer diameter side of the vacuum sucking adhering plate 31 is fixed by the pressing piece 36 and the center portion of the vacuum sucking adhering plate 31 is lifted, so that a vacuum is defined.

The lever 37 includes a shaft connecting portion 37' and a handle portion 37'', the shaft connecting portion 37' is rotatably connected to the top end of the operating shaft 33 by a pin 38, wherein the shaft connecting portion 37' includes mutually neighboring contacting surfaces a and b to be contacted to a lever supporting surface 29 formed around the shaft inserting hole 25 of the carrier main body 20, and a distance from one side contacting surface a to the center of the pin 38 is formed longer in distance from the other side contacting surface b to the center of the pin 38, so that a sucking adhering operation is made by lifting the operating shaft 33 in a state that one side contacting surface a is contacted to the lever supporting surface 29, and the sucking adhering operation of the vacuum sucking adhering plate 31 is released by dropping the operating shaft 33 in a state that the other side contacting surface b is contacted to the lever supporting surface 29.

A shock absorbing member 39 is elastically supported between the top surface of the vacuum sucking adhering plate and the bottom surface of the supporting base portion 21 at a lower portion of the carrier main body 20 is inserted to the operating shaft 33, so that the ski can be protected by preventing that any vibration produced during running of the automobile is directly transferred to the carrier main body 20.

Preferably, the present invention is provided with a vacuum releasing means 40 to easily release the vacuum sucking adhering plate body 11 from the roof, and this vacuum releasing means is formed with a hooking protrusion 41 at one side of the vacuum sucking adhering plate inserting portion 32 of the fixing plate body 11, and a protrusion 42 is formed to one side peripheral edge of the vacuum sucking adhering plate 31 such that this protrusion 42 is positioned on the top surface of the hooking protrusion 41. A knob 43 is provided to one side of the fixing plate body 11, namely at the side formed with the hooking protrusion 41.

The cover 50 includes a covering portion 51 which covers the lever 37 positioned at the lever supporting surface 29 thereby covering the ski fixing means 22 of the carrier main body 20, and a hinge connecting portion 52 connected by a hinge with the carrier main body 20. The locking means 60 is provided with a locking portion 61 at one end of the carrier main body 20, a lock 62 to be locked to said locking portion 61, and a locking block 64 for rotating said lock 62, and a protecting cover 63 is provided to the locking block 64 so as to prevent entering of snow or rain.

In accordance with the ski carrier of the present invention constructed as above, when the cover 50 is lifted up and opened and the lever 37 is rotated in a state such that the contacting surface b of shorter distance to the center of the pin 38 of the shaft connecting portion 37' is contacted to the rubber magnet plate 12 whereby it is put on the roof of the automobile (refer to FIG. 2), the rubber magnet plate 12 attached to the fixing plate body 11 is fixed by a magnetic force. When the lever 37 is rotated in a state such that the contacting surface a of longer distance to the center of the pin 38 of the shaft connecting portion 37' is contacted to the lever supporting surface 29, the operating shaft 33 is lifted up and simultaneously the center portion of the vacuum sucking adhering plate 31 fixed to its bottom end is drawn up so that the bottom surface of the vacuum sucking adhering plate 31 is made to be concave.

At this moment, a volume of space defined between the top surface of the roof and the bottom surface of the vacuum sucking adhering plate 31 at a time when the contacting surface a - long in distance to the center of the pin 38 - becomes contacted to the lever supporting surface 29 becomes bigger than a volume of a space defined between the roof and the bottom surface of the vacuum sucking adhering plate 31 in a state that contacting surface b - shorter in its distance to the center of the pin 38 - is contacted to the lever 29, and simultaneously a negative pressure is produced within said space, and the vacuum sucking adhering plate 31 is sucked and adhered by vacuum to the top surface of the roof of automobile.

Accordingly, since the ski carrier of the present invention is very firmly fixed by a vacuum sucking and adhering function of the vacuum sucking adhering plate 31 as well as a sucking adhering function by a magnetic force of the rubber magnet plate 12 attached to the fixing plate body 11, there is no risc of release by either vibration or shock produced during running of the automobile or a lifting up of the handle 43 by a person, and since the rubber magnet plate 12 is attached with the fixing plate body 11 of predetermined width made of metal or the like on its top surface, not only it is difficult to insert a screw driver or the like between the rubber magnet plate 11 and the roof but also even if it is inserted, it can not reach the vacuum sucking adhering plate 31, therefore its release is impossible without releasing the vacuum of the vacuum sucking adhering plate 31.

A pair of ski carriers are attached at front and back of the roof by this method, and an elastic band B is released from one side band hooker 27 and then a corner of the ski S is abutted to the ski corner supporting portion 24 and simultaneously the ski is arranged such that a surface portion of the ski S is abutted to the ski supporting portion 23 and next the elastic band which has been released is fixed to the band hooker 27.

Thereafter, the cover which has been opened is rotated downwardly, whereby the ski fixing means 22 of the carrier main body 20 and the lever 37 are covered by the lever covering portion 51, so that it is not exposed to the exterior and then a key is inserted to the locking block 65 formed at one end portion of the cover portion 50 and turned to a locking direction. Then the lock 62 is hooked to the locking portion 61 and locked whereby the cover 50 can not to be opened easily. Since the lever 37 is covered by the covering portion 51 whereby it is not exposed to exterior, the lever 37 can not to be easily turned over whereby the ski carrier becomes very secure and loss or theft of the ski and the ski carrier can be prevented.

In releasing the ski S from the ski carrier in order to use the ski, it can be simply released by a reverse order of above-described operation, and the ski S can be released when a key is inserted to the locking block 64 and turned to the opening direction and the lock 62 is turned. Then the lock 62 is made to be drawn out from the locking portion 61 and the locked state is released and the cover 50 is opened by turning the lock 62 and the elastic band B is released.

After releasing the ski S, the elastic band B is hooked up to the band hooker 27 and the cover 50 is shut and then locked by the locking means 60 so that the ski carrier is secured again and theft can be prevented.

Vibrations or shocks produced when a car runs with a fixed ski to the ski carrier are primarily absorbed by the rubber magnet plate 31 and the vacuum sucking adhering plate and then subsequently absorbed by the absorbing member 39 provided between the vacuum sucking adhering plate 31 and the bottom surface of the supporting base portion 21, so that vibrations and shocks are not directly transferred to the ski carrier main body 20 and the ski S and thereby a damage of the ski S can be prevented.

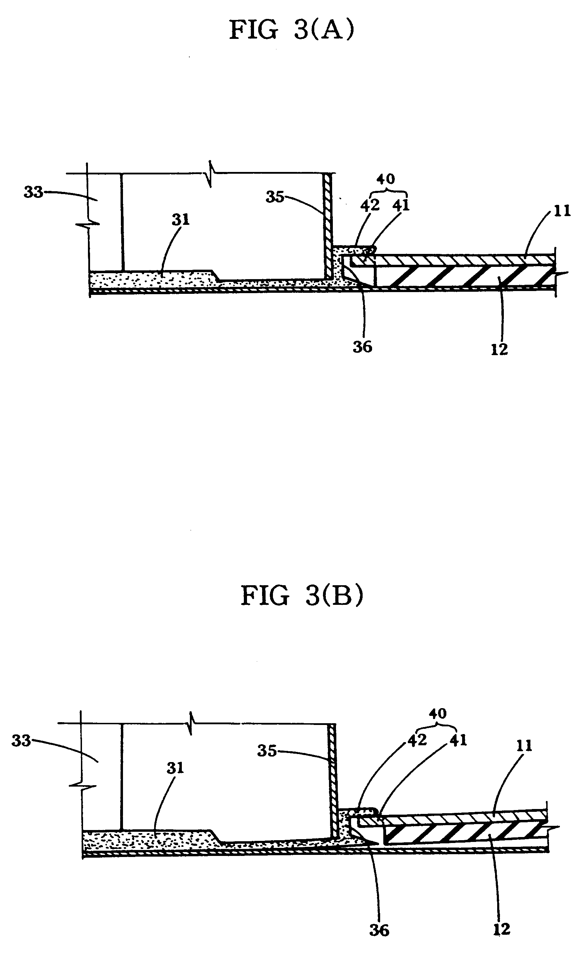

In case when the ski carrier is not in use, the lock by the locking means is released and the lever 37 is turned in a state that the cover 50 is opened and the contacting surface b shorter in distance to the pin 38 is contacted to the lever supporting surface 29 and the operating shaft 33 is dropped down and the vacuum sucking adhering plate 31 returns to its original state as in FIG. 2 and then the handle 43 is slightly lifted up. Since the hooking protrusion 41 of the fixing plate body 11 lifts up the protrusion 42 upwardly, a side of the vacuum sucking adhering plate 31 is slightly lifted up [refer to FIG. 3(B)] and air enters from that place, so that the negative pressure is removed and the ski carrier can be simply released.

The ski carrier of the present invention as described above can be easily released in case of not in use and it can be firmly attached by using a vacuum sucking adhering plate and a rubber magnet plate and it does not give any damage to the roof, and its structure is simple. Furthermore, not only theft of the ski carrier and the ski can be surely prevented, but also the damage of the ski can be prevented by protecting the ski from shocks produced during running of the automobile.

## Claims

1. A ski carrier comprising:
a magnetically acting fixing member (10) comprising a rubber magnet plate (12);
a carrier main body (20) which is fixed to said fixing member (10) for supporting and fixing the ski (S); and
a cover (50) which is connected to said carrier main body (20) for covering ski fixing means (22) of said carrier main body (20),
characterized in that
said rubber magnet plate (12) of said magnetically acting fixing member (10) is covered by a fixing plate body (11) of plate-like material;
a vacuum sucking adhering means (30) is arranged in a center of said magnetically acting fixing member (10) and comprises a vacuum sucking adhering plate (31), which can be vertically actuated by an actuating lever (37) via a shaft inserting hole (25); and
said cover (50) connected to said carrier main body (20) also is for covering said actuating lever (37) of said vacuum sucking adhering means (30).

2. The ski carrier of claim 1, wherein said vacuum sucking adhering means (30) in the center of said magnetically acting fixing member (10) furthermore comprises an operating shaft (33) which is fixed with its bottom end to a top surface center portion of said vacuum sucking adhering plate (31) and extends into direction of its upper portion through said shaft inserting hole (25) pierced through said carrier main body (20) and said actuating lever (37) acts on said upper portion of said operating shaft (33) for lifting up and dropping down said top surface center portion of said vacuum sucking adhering plate (31).

3. The ski carrier as defined in claim 1 or 2, wherein said vacuum sucking adhering plate (31) is provided within a vacuum sucking adhering plate inserting portion (32) formed in the center of said fixing member (10).

4. The ski carrier as defined in claim 1, 2 or 3, wherein a vacuum releasing means (40) is further provided which comprises a hooking protrusion (41) formed at one side of said vacuum sucking adhering plate inserting portion (32) of the fixing member (10), a protrusion (42) formed at one side periphery edge of the vacuum sucking adhering plate (31) in an overlying relationship to said hooking protrusion (41), and a handle (43) provided to the fixing plate body (11), wherein upon lifting said handle (43) said hooking protrusion (41) lifts up said overlying protrusion (42) of said vacuum sucking adhering plate (31) for allowing ingress of air under said vacuum sucking adhering plate (31).

## Patentansprüche

1. Ein Ski-Träger mit:
einem magnetisch wirkenden Befestigungsteil (10) mit einer Gummimagnetplatte (12);
einem Trägerhauptkörper (20), der an dem Befestigungsteil (10) zum Tragen und Festlegen des Skis S befestigt ist; und
einer Abdeckung (50), welche mit dem Trägerhauptkörper (20) zum Abdecken von Skibefestigungsvorrichtungen (22) des Trägerhauptkörpers (20) verbunden ist,
dadurch gekennzeichnet, daß
die Gummimagnetplatte (12) des magnetisch wirkenden Befestigungsteils (10) von einem Befestigungsplattenkörper (11) aus einem plattenförmigen Material bedeckt ist;
eine Vakuumsaug-Haftvorrichtung (30) in einer Mitte des magnetisch wirkenden Befestigungsteils (10) angeordnet ist und eine Vakuumsaug-Haftplatte (31) aufweist, welche von einem Betätigungshebel (37) über eine Welleneinführbohrung (25) vertikal betätigt werden kann; und
die Abdeckung (50), die mit dem Trägerhauptkörper (20) verbunden ist auch zur Abdeckung des Betätigungshebels (37) der Vakuumsaug-Haftvorrichtung (30) ist.

2. Der Ski-Träger nach Anspruch 1, wobei die Vakuumsaug-Haftvorrichtung (30) in der Mitte des magnetisch wirkenden Befestigungsteils (10) weiterhin eine Betätigungswelle (33) aufweist, welche mit ihrem Bodenende mit einem oberen mittigen Oberflächenabschnitt der Vakuumsaug-Haftplatte (31) verbunden ist und sich in Richtung ihres oberen Abschnittes durch die Welleneinführbohrung (25) erstreckt, die durch den Trägerhauptkörper (20) verläuft, wobei der Betätigungshebel (37) auf den oberen Abschnitt der Betätigungswelle (33) einwirkt, um den oberen mittigen Oberflächenabschnitt der Vakuumsaug-Haftplatte (31) anzuheben und abzusenken.

3. Der Ski-Träger nach Anspruch 1 oder 2, wobei die Vakuumsaug-Haftplatte (31) innerhalb eines Einsetzabschnittes (32) für die Vakuumsaug-Haftplatte angeordnet ist, der in der Mitte des Befestigungsteils (10) ausgebildet ist.

4. Der Ski-Träger nach Anspruch 1, 2 oder 3, wobei weiterhin eine Vakuumfreigabevorrichtung (40) vorgesehen ist, welche einen Hakenvorsprung (41) an einer Seite des Einsetzabschnittes (32) des Befestigungsteils (10) für die Vakuumsaug-Haftplatte, einen Vorsprung (42) an einer seitlichen Umfangskante der Vakuumsaug-Haftplatte (31) in einer überlappenden Beziehung zu dem Hakenvorsprung (41) und einen Handgriff (43) aufweist, der an dem Befestigungsplattenkörper (11) vorgesehen ist, wobei bei einem Anheben des Handgriffes (43) der Hakenvorsprung (41) den darüber liegenden Vorsprung (42) der Vakuumsaug-Haftplatte (31) anhebt, um den Eintritt von Luft und die Vakuumsaug-Haftplatte (31) zu ermöglichen.

## Revendications

1. Porte-skis comprenant :
un élément de fixation à action magnétique (10) comprenant une plaque magnétique en caoutchouc (12) ;
un corps principal (20) de porte-skis qui est fixé audit élément de fixation (10) pour supporter et fixer le ski (S) ; et
un rabat (50) qui est relié audit corps principal (20) de porte-skis pour recouvrir des moyens (22) de fixation du ski dudit corps principal (20) de porte-skis,
caractérisé en ce que
ladite plaque magnétique en caoutchouc (12) dudit élément de fixation à action magnétique (10) est recouverte par un corps (11) de plaque de fixation fait de matière en forme de plaque ;
un moyen adhérent à succion à vide (30) est agencé au centre dudit élément de fixation à action magnétique (10) et comprend une plaque adhérente à aspiration à vide (31), qui peut être actionnée verticalement par un levier d'actionnement (37) à travers un trou (25) d'insertion de tige ; et
ledit rabat (50) relié audit corps principal (20) de porte-skis est aussi destiné à recouvrir ledit levier d'actionnement (37) dudit moyen adhérent à succion à vide (30).

2. Porte-skis selon la revendication 1, dans lequel le moyen adhérent à succion à vide (30) placé au centre de l'élément de fixation à action magnétique (10) comprend en supplément une tige de commande (33) qui est fixée, par son extrémité inférieure, à une partie centrale de la surface supérieure de ladite plaque adhérente à succion à vide (31) et s'étend, en direction de sa partie supérieure, à travers ledit trou (25) d'insertion de tige qui est percé à travers ledit corps principal (20) de porte-skis, et ledit levier d'actionnement (37) agit sur ladite partie supérieure de ladite tige de commande (33) pour soulever et laisser redescendre ladite partie centrale de la surface supérieure de ladite plaque adhérente à succion à vide (31).

3. Porte-skis selon la revendication 1 ou 2, dans lequel ladite plaque adhérente à succion à vide (31) est prévue dans une partie (32) d'insertion de la plaque adhérente à succion à vide formée au centre dudit élément de fixation (10).

4. Porte-skis selon la revendication 1, 2 ou 3, dans lequel il est prévu en supplément un moyen (40) de relâchement du vide qui comprend une protubérance d'accrochage (41) formée sur un côté de ladite partie d'insertion (32) de l'élément de fixation (10) de la plaque adhérente à succion à vide, une protubérance (42) formée sur un bord de la périphérie latérale de la plaque adhérente à succion à vide (31), dans une position relative de supereposition par rapport à ladite protubérance d'accrochage (41), et une poignée (43) prévue sur le corps (1) de la plaque de fixation, dans lequel, lorsqu'on soulève ladite poignée (43), ladite protubérance d'accrochage (41) soulève ladite protubérance superposée (42) de ladite plaque adhérente à succion à vide (31) pour permettre l'entrée d'air sous ladite plaque adhérente à succion à vide (31).
